## Europäisches Patentamt
## European Patent Office
## Office européen des brevets

(19)

(11) Numéro de publication: **0 135 422**
**A1**

(12)

# DEMANDE DE BREVET EUROPEEN

(21) Numéro de dépôt: **84401580.0**

(22) Date de dépôt: **27.07.84**

(51) Int. Cl.⁴: **G 06 F 12/14**
**G 06 F 11/34**

(30) Priorité: **11.08.83 FR 8313207**

(43) Date de publication de la demande:
**27.03.85 Bulletin 85/13**

(84) Etats contractants désignés:
**DE GB IT**

(71) Demandeur: **Lévêque, Christophe**
**66, Chemin des Cendres**
**F-92000 Nanterre(FR)**

(72) Inventeur: **Lévêque, Christophe**
**66, Chemin des Cendres**
**F-92000 Nanterre(FR)**

(72) Inventeur: **Oros, Philippe**
**17, rue de Langelle**
**F-65100 Lourdes(FR)**

(72) Inventeur: **Sutter, Xavier**
**173, rue Armand Silvestre**
**F-92400 Courbevoie(FR)**

(74) Mandataire: **Tony-Durand, Serge**
**Cabinet Tony-Durand 22, Boulevard Voltaire**
**F-75011 Paris(FR)**

(54) **Dispositif de protection de logiciels utilisés par un ordinateur connecté à au moins un terminal périphérique.**

(57) La présente invention concerne un dispositif de protection de logiciels utilisés par un ordinateur monobloc ou connecté à au moins un terminal périphérique.

Ce dispositif est caractérisé en ce qu'il est constitué par une boîte (1) branchée sur une sortie série de l'ordinateur (2) et contenant une mémoire (19, 20) pour stocker une pluralité de codes "réponse" (R), chacun de ces codes "réponse" (R) étant associé d'une manière univoque à un code "question" (Q) pouvant être émis par l'ordinateur (2), et un microprocesseur (17) pour détecter l'émission, par l'ordinateur, de chaque code "question" (Q), pour retrouver, dans la mémoire (19, 20), le code "réponse" (R) correspondant au code "question" (Q) détecté et pour réémetre ce code "réponse" (R) en direction de l'ordinateur (2).

EP 0 135 422 A1

0135422

La présente invention concerne un dispositif de
protection de logiciels utilisés par un ordinateur utilisé
seul (monobloc) ou connecté à un ou plusieurs terminaux
périphériques.

Le développement très important des ordinateurs, ces
dernières années, a entraîné la conception parallèle de
logiciels présentant une valeur commerciale croissante en
fonction de leur complexité. Il en est résulté naturellement, de la part des utilisateurs des matériels, la tentation de copier les logiciels existants.

Divers moyens ont été envisagés jusqu'à présent pour
éviter la copie ou le "piratage" des logiciels mais ces
moyens n'ont pas donné toute satisfaction car soit ils sont
chers, soit ils sont compliqués à mettre en oeuvre.

La présente invention vise à remédier à ces inconvénients en procurant un dispositif de conception particulièrement simple, et assurant à la fois la protection des logiciels et la tenue de la comptabilité de l'utilisation des
logiciels protégés.

A cet effet ce dispositif de protection de logiciels
utilisés par un ordinateur est caractérisé en ce qu'il est
constitué pr une boîte branchée sur une sortie série de
l'ordinateur et contenant une mémoire pour stocker une pluralité de codes "réponse", chacun de ces codes "réponse"
étant associé d'une manière univoque à un code "question"
pouvant être émis par l'ordinateur, et un microprocesseur
pour détecter l'émission, par l'ordinateur, de chaque code
"question", pour retrouver, dans la mémoire, le code "réponse" correspondant au code "question" détecté et pour
réémettre ce code "réponse" en direction de l'ordinateur de
telle façon que ce dernier continue à assurer le déroulement
de son programme tant qu'il reçoit, en réponse à l'émission
de codes "question" successifs, les codes "réponse" corrects.

Suivant une caractéristique complémentaire de l'invention le microprocesseur assume une fonction de comptage-
décomptage en combinaison avec une mémoire non volatile de
type EAROM pour totaliser, en addition, des codes "crédit" émis à prtir de l'ordinateur ou d'un terminal et, en soustraction, des codes "débit" émis par l'ordinateur après
l'écoulement de périodes de temps déterminées d'utilisation
du logiciel.

Lorsque l'ordinateur est connecté à un ou plusieurs
terminaux périphériques, le dispositif de protection est
intercalé entre l'ordinateur et ce ou ces terminaux périphériques et il comporte alors un étage interrupteur commandé
par le microprocesseur pour interrompre la liaison terminalordinateur dès qu'un code particulier (code d'appel) est
détecté et pour rétablir la liaison dès que le code réponse
correspondant a été émis vers l'ordinateur.

Le dispositif suivant l'invention offre ainsi l'avantage qu'il doit être obligatoirement branché à la sortie
de l'ordinateur ou entre celui-ci et le ou les terminaux
périhériques pour que le logiciel de l'ordinateur puisse
être utilisé. Autrement dit l'utilisateur de l'installation peut dupliquer le logiciel pour des raisons de sécurité
mais ce logiciel ne pourra en aucune manière être utilisé
sur un autre matériel non équipé du dispositif de protection
suivant l'invention.

Un autre avantage du dispositif suivant l'invention
est qu'il permet de faire payer à l'utilisateur le logiciel
en fonction de la durée effective d'utilisation de celui-ci,
d'où une possibiité effective de location de logiciels

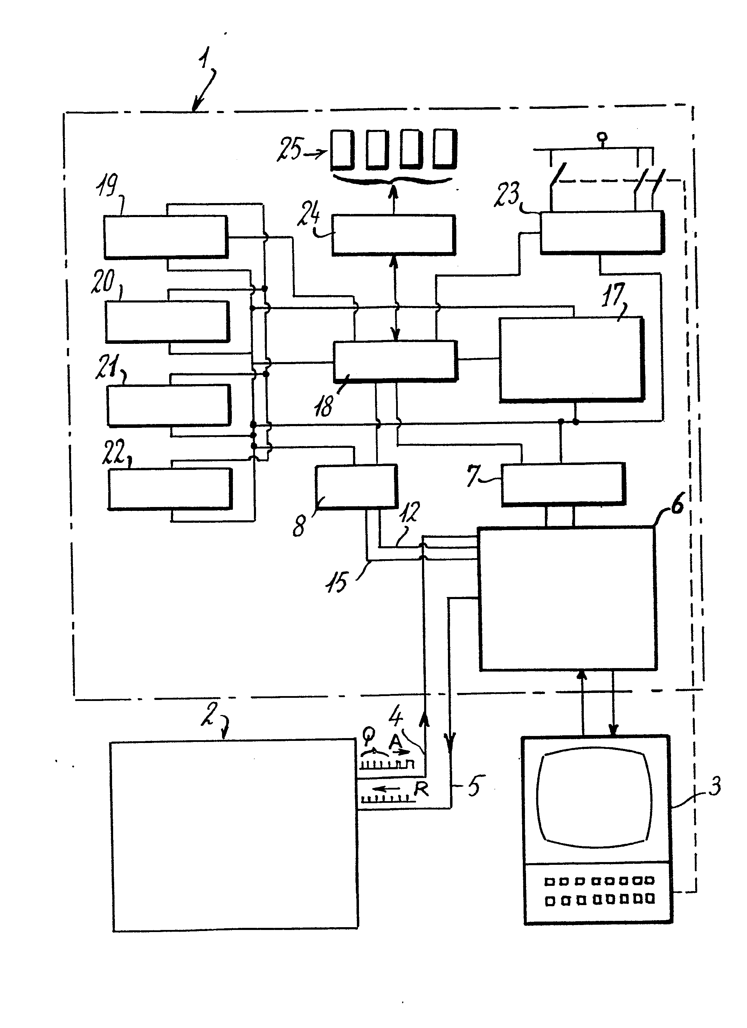

On décrira ci-après, à titre d'exemple non limitatif,
une forme d'exécution de la présente invention, en référence
au dessin annexé qui est un schéma synoptique du dispositif
de protection de logiciels.

Le dispositif de protection de logiciel qui est
représenté dans ensemble à l'intérieur d'un rectangle en
trait mixte, sur le dessin, et qui porte la référence 1, est
connecté directement à la sortie série ( standard RS232C)
d'un ordinateur 2 travaillant en liaison avec un terminal
périphérique 3 auquel il est connecté par une paire de lignes de transmission 4 et 5.

Le dispositif de protection 1 assure deux fonctions principales à savoir en premier lieu celle d'une "serrure" informatique et, en second lieu, celle de la tenue de la comptabilité de la durée d'utilisation, par l'ordinateur 2, du ou des logiciels mis en oeuvre dans cet ordinateur.

Le dispositif de protection 1 comporte principalement un étage interrupteur 6 interposé sur les deux lignes de transmission 4 et 5 et relié à deux interfaces 7 et 8. 11 comporte par ailleurs un microprocesseur 17, un décodeur 18, un ensemble de quatre mémoires à savoir deux mémoires 19, 20 du type RAM, une mémoire 21 du type EPROM et et une mémoire 22 du type EAROM, une interface 23 de sélection du code d'appel et une interface 24 pour un afficheur numérique 25.

Le principe de base du fonctionnement du dispositif de protection suivant l'invention est qu'au cours de son fonctionnement l'ordinateur 2 envoie sur la ligne de transmission 4, à intervalles réguliers ou non des codes "question" Q constitués par des trains de signaux représentant, par exemple, respectivement 24 caractères, en série ou parallèle. Le dispositif de protection 1 contient de son côté des codes "réponse" R constitués par des trains de signaux de caractères stockés dans les mémoires 19et 20 et dont chacun doit être réémis par la boîte 1 en direction de l'ordinateur 2, en réponse à la réception d'un code "question" Q déterminé. Si le code "réponse" R correct n'est pas réémis par le dispositif 1 vers l'ordinateur 2, en réponse à la réception d'un code "question" Q déterminé, le déroulement du programme de l'ordinateur 2 est alors automatiquement arrêté.

Lors du fonctionnement normal en dialogue entre l'ordinateur 2 et le terminal 3, l'étage interrupteur 6 est fermé et laisse passer les trains de signaux dans les deux sens sur les lignes de transmission 4 et 5.

Périodiquement l'ordinateur 2 émet un train de signaux de caractères correspondant à un code "question" Q, précédé d'un signal d'appel particulier A. Le signal d'appel A qui précède le code "question" Q est constitué par un caractère particulier qui peut être choisi à partir d'un clavier relié à l'interface 23. Ce signal d'appel A est détecté par le microprocesseur 17 et ce microprocesseur 17 agit pour interrompre la transmission à travers l'étage interrupteur 6 dans les deux sens.

Le code "question" Q qui parvient au dispositif de protection 1 immédiatement après le code d'appel A est reconnu et décodé par le microprocesseur 17 qui recherche dans les mémoires 19 et 20 le code "réponse" R devant être émis à la suite de la réception du code "question" Q. Les mémoires 19 et 20 contiennent tous les codes "réponse" R qui correspondent d'une manière univoque aux divers codes "question" Q envoyés par l'ordinateur 2.

Lorsque le code "réponse" R a été lu dans la mémoire correspondante parmi les mémoires 19 et 20, il est transmis, sous la commande du microprocesseur 17, sur la ligne 5 vers l'ordinateur 2. Ce dernier, par son logiciel, contrôle que le code "réponse" reçu R correspond bien au code "question" émis Q et à partir de ce moment les transmissions normales sont rétablies.

Le dispositif 1 de protection de logiciels assume également une seconde fonction qui est la tenue de la comptabilité de l'utilisation des logiciels protégés. A cet effet le microprocesseur 17 assume une fonction de comptage-décomptage et il totalise un certain nombre de points ou crédit achetés au préalable par l'utilisateur. Cet achat peut être concrétisé par l'utilisateur lui-même qui frappe sur le clavier du terminal 3 un code approprié, ce code lui ayant été communiqué après qu'il ait réglé le nombre de points achetés. La frappe du code sur le clavier du terminal 3 se traduit donc par l'emmagasinage du nombre de crédits correspondants dans la mémoire 22, ce nombre apparaissant sur les afficheurs numériques 25.

Au cours de l'utilisation du logiciel dans l'ordinateur 2, celui-ci émet, après l'écoulement d'une période de temps déterminée, un code "débit" qui est reçu par le dispositif 1, décodé et traité par le microprocesseur 17 en soustraction. Autrement dit le nombre de crédits ou points préalablement enregistrés dans la mémoire 22 va en diminuant dans le temps, au fur et à mesure de l'utilisation du programme.

Si l'utilisateur ne rachète pas de crédits et si le nombre de ceux-ci atteint zéro, ce passage à l'état zéro est traduit par l'envoi en retour de codes "réponse" R ne correspondant pas aux codes "question" émis par l'ordinateur, ce qui a pour effet de bloquer le fonctionnement du logiciel dans l'ordinateur 2 et ceci jusqu'à l'achat de nouveaux crédits.

Bien que, dans la description qui précède, le dispositif suivant l'invention ait été considéré comme étant branché entre l'ordinateur 2 et un terminal périphérique 3, il peut être également connecté à la sortie de l'ordinateur 2, si celui-ci est monobloc, pour contrôler l'utilisation des logiciels à l'intérieur de cet ordinateur. Dans ce cas l'interrupteur 6 est supprimé mais la reconnaissance du code d'appel A, la réception et le traitement des codes "question" Q et l'émission des codes "réponse" R sont réalisées comme dans le cas précédent, par les circuits internes du dispositif 1.

## REVENDICATIONS

1.- Dispositif de protection de logiciels utilisés par un ordinateur caractérisé en ce qu'il est constitué par une boîte (1) branchée sur une sortie série de l'ordinateur (2) et contenant une mémoire (19, 20) pour stocker une pluralité de codes "réponse" (R), chacun de ces codes "réponse" (R) étant associé d'une manière univoque à un code "question" (Q) pouvant être émis par l'ordinateur (2), et un microprocesseur (17) pour détecter l'émission, par l'ordinateur, de chaque code "question" (Q), pour retrouver, dans la mémoire (19, 20) , le code "réponse" (R) correspondant au code "question" (Q) détecté et pour réémettre ce code "réponse" (R) en direction de l'ordinateur (2) de telle façon que ce dernier continue à assurer le déroulement de son programme tant qu'il reçoit, en réponse à l'émission de codes "question" successifs, les codes "réponse" corrects.

2.- Dispositif suivant la revendication 1 caractérisé en ce que le microprocesseur (17) assume une fonction de comptage-décomptage en combinaison avec une mémoire non volatile (22) du type EAROM, pour totaliser, en addition, des codes "crédit" émis  partir d'un clavier et, en soustraction, des codes "débit" émis par l'ordinateur (2) après l'écoulement de périodes de temps déterminées d'utilisation du logiciel, le microprocesseur (17) étant connecté à un afficheur numérique (25) indiquant à tout moment le total des crédits disponibles.

3.- Dispositif suivant l'une quelconque des revendications précédentes  caractérisé en ce qu'il comporte un sélecteur d'un code d'appel (A) précédant les divers codes "question" (Q) émis par l'ordinateur (2), ce sélecteur comportant un clavier.

4.- Dispositif suivant l'une quelconque des revendications précédentes caractérisé en que, dans le cas où il est branché entre un ordinateur (2) et au moins un terminal périphérique (3), il comporte un interrupteur (6) commandé par le microprocesseur (17) pour établir ou interrompre la liaison entre l'ordinateur (2) et le ou les terminaux périphériques (3) et ce sous la commande du microprocesseur
(17).

Office européen
des brevets

**RAPPORT DE RECHERCHE EUROPEENNE**

**0135422**
Numéro de la demande

EP 84 40 1580

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 084 441 (ROGERS)<br>* page 4, ligne 19 - page 9, ligne 19 * | 1 | G 06 F 12/14<br>G 06 F 11/34 |
| A | | 4 | |
| A | DE-A-3 149 279 (MULDER)<br>* page 9, ligne 26 - page 11, ligne 14 * | 1 | |
| A | IBM TECHNICAL DISCLOSURE BULLETIN, vol. 22, no. 2, juillet 1979, page 504, New York, US; W.C. DODT et al.: "Improved user accounting system"<br>* page 504, lignes 6-15 * | 2 | |
| P,A | EP-A-0 089 876 (CII HONEYWELL BULL)<br>* en entier * | 1,2 | DOMAINES TECHNIQUES RECHERCHES (Int. Cl.4)<br><br>G 06 F 12/14<br>G 06 F 11/34 |

Le présent rapport de recherche a été établi pour toutes les revendications

| Lieu de la recherche<br>LA HAYE | Date d'achèvement de la recherche<br>15-11-1984 | Examinateur<br>LEPEE W. |
|---|---|---|